# EUROPEAN PATENT APPLICATION

(11) **EP 2 985 406 A2**
(43) Date of publication of application: **17.02.2016**
(21) Application number: 15179034.2
(22) Date of filing: 30.07.2015
(51) Int. Cl.: E21B 17/01, C08J 9/32, B63B 22/00

(54) **BUOYANT FLUID COMPOSITION**

(30) Priority: 15.08.2014 GB 201414555
(71) Applicant: Aubin Limited, Ellon, Aberdeenshire AB41 9RF (GB)
(72) Inventor: COLLINS, Patrick, Ellon, Aberdeenshire AB41 9RF (GB)
(74) Representative: HGF Limited

(57) **Abstract**

A buoyant fluid comprising a base fluid, microspheres and a viscosifying agent. The viscosifying agent comprising a block copolymer. the buoyant fluid is used for example in syntactic buoyancy modules attached to subsea risers or ROVs.

## Description

The present invention relates to the composition of a buoyant fluid. The buoyant fluid may be used to provide objects, particularly heavy objects, with buoyancy underwater.

The subsea industry uses a variety of different equipment subsea. The equipment used that is not fixed to the seabed often requires, or is aided by, the provision of buoyancy modules.

Subsea risers for example carry produced fluids from a subsea wellhead through the water column to a surface facility, such as an offshore platform. Subsea risers often have syntactic buoyancy modules attached thereto. At greater depths the subsea riser is so heavy that it cannot support its own weight in the water and there is a significant risk of failure. Syntactic buoyancy modules are often used to reduce this "top tension" on subsea risers or other subsea elements by providing distributed support.

Syntactic buoyancy modules can also assist in shaping the underwater configuration of subsea risers to facilitate the flow of produced fluids, and allow enough slack in the subsea riser to cope with the heave or other movement of a floating surface facility caused by the surface conditions.

Also, Remotely Operated Vehicles (ROVs) often have large syntactic buoyancy modules provided thereon. Buoyancy is added to ROVs to render them neutrally buoyant. This reduces the power required to maintain the position and manoeuvre the ROV in the water.

Whilst generally satisfactory, the inventor of the present invention has noted some limitations of syntactic and other conventional buoyancy.

In accordance with a first aspect of the present invention there is provided a buoyant fluid comprising:
a base fluid,
microspheres, and
a viscosifying agent,
wherein the viscosifying agent comprises a block copolymer.

The buoyant fluid is typically a liquid. The buoyant fluid is typically incompressible or at least substantially incompressible. The buoyant fluid is normally a liquid and thereby incompressible. It may be an advantage of the present invention that when the buoyant fluid is underwater, the buoyant fluid is incompressible and therefore the volume of a fixed quantity of the buoyant fluid does not change or at least does not substantially change with a change in underwater depth and therefore also pressure. This provides an operator with greater control of a structure underwater that contains the buoyant fluid compared to using, for example, a gas. The volume of a fixed quantity of a gas changes substantially with a change in underwater depth and pressure.

The buoyant fluid typically comprises from 40 to 70% vol/vol base fluid, optionally from 50 to 60% vol/vol base fluid and normally 53% base fluid.

The base fluid may have a relatively low viscosity, that is a viscosity of from 1 to 5cSt at 40°C. The flash point of the base fluid may be from 75 to 125°C. The base fluid may have a relatively high flash point, that is a flash point of more than or equal to 90°C. The base fluid may be sheen free.

The base fluid may have a density of from 0.7 to 1kg/l at 15°C. The lower the density of the base fluid the less microspheres are required to provide the buoyant fluid with the required buoyancy. The density of the base fluid may be from 0.7 to 1 g/cc, typically 0.76g/cc. The base fluid may have a specific gravity of more than 0.40g/cm³, optionally more than 0.45g/cm³, and may be more than 0.50g/cm³. The pour point may be from 0 to less than -48°C.

The base fluid may be an oil. The oil may be a mineral oil. The oil is typically a liquid. The oil may be the majority component vol/vol or wt/wt of the base fluid.

The oil is preferably a low toxicity oil, such as a hydrocarbon, an alkane, an aliphatic oil, poly-alpha-olefin, alkyl ester and/or vegetable oil. The base fluid may have a very low toxicity to marine life, the aquatic toxicity for fish LC₅₀ being greater than or equal to 1000mg/l. The base fluid may be referred to as having a low and/or relatively low aromaticity. The base fluid may be SIPDRILL™.

The oil may be biodegradable, for example vegetable oil. Thus for certain embodiments of the invention, the inherent risk of environmental damage posed by the buoyant fluid leaking from a container is mitigated and therefore not a significant concern because the biodegradable oil used does not present an environmental risk or concern to wildlife.

In an alternative embodiment the base fluid may comprise water.

The buoyant fluid typically comprises from 0.5 to 5% vol/vol viscosifying agent, optionally from 1 to 3% vol/vol viscosifying agent and typically 1.6% vol/vol viscosifying agent.

The viscosifying agent typically increases the viscosity and/or changes the rheological profile of the buoyant fluid. The viscosity of the buoyant fluid comprising the viscosifying agent typically decreases with an increase in shear rate. The decrease in viscosity with an increase in shear rate may be referred to as shear thinning. Typically when the buoyant fluid is subjected to shear forces, for example when being pumped and/or transferred from one container to another, the viscosity of the buoyant fluid reduces and the buoyant fluid flows relatively freely. Typically when the shear forces are removed, for example when the buoyant fluid is being stored in a container, the viscosity increases, helping to keep the buoyant fluid a homogeneous mixture of the base fluid, microspheres, viscosifying agent and dispersant when present.

The viscosifying agent typically helps to suspend the microspheres in the buoyant fluid.

The block copolymer of the viscosifying agent typically comprises two or more homopolymer subunits joined together with one or more covalent bonds. There may be a junction block between the two or more homopolymer subunits. The block copolymer may be a diblock copolymer with two distinct blocks.

The block copolymer of the viscosifying agent may be a linear diblock copolymer of styrene and one or more of ethylene, propylene and butadiene. The styrene content of the linear diblock copolymer may be between 20 and 35%, typically 28% wt/wt. The viscosifying agent typically forms a plurality of micelles. The plurality of micelles typically provides the shear thinning characteristics described above. The viscosifying agent may be KRATON™.

The plurality of micelles typically comprise a core of poly(styrene) heads and a corona of poly(ethylene-co-propylene) and/or hydrogenated p(isoprene) tails.

The plurality of micelles may be formable after the viscosifying agent has been added to the base fluid and the mixture heated to more than or equal to 50°C, typically more than or equal to 60°C and normally more than or equal to 70°C.

Alternatively the viscosifying agent may be a polysaccharide. The viscosifying agent may comprise a plurality of pentasaccharide repeat units. The plurality of pentasaccharide repeat units typically comprise one or more of glucose, mannose, and glucuronic acid. The viscosifying agent may be xanthan gum.

The microspheres are normally mixed with the viscosifying agent and/or a mixture of the viscosifying agent and the base fluid. The mixture may be referred to as a viscosified base fluid. The mixture may also contain a dispersant. The mixture may be referred to as buoyant fluid. One or more of the base fluid, microspheres, viscosifying agent, dispersant when present, and buoyant fluid may be heated to at least 70°C. Heating one or more of the base fluid, microspheres, viscosifying agent, dispersant when present, and buoyant fluid typically helps to make the buoyant fluid a homogenous mixture of two or more of the base fluid, microspheres, viscosifying agent and dispersant.

The buoyant fluid comprising the viscosifying agent is typically a stable mixture in the temperature range of from -10 to 100°C, typically from 0 to 70°C. It may be an advantage of the present invention that the buoyant fluid is typically a stable mixture. The buoyant fluid is a stable mixture when the components of the buoyant fluid do not separate or split from one another over time and/or with an increase in temperature.

The microspheres may each have a sealed chamber containing a gas or an at least partial vacuum. The microspheres may be from 1µm to 5mm in diameter, optionally from 5 to 500µm in diameter and typically from 20 to 200µm in diameter.

The microspheres are typically rigid and so are incompressible at underwater pressures. The microspheres may be obtained from 3M™. The microspheres may be rated to over 2,000kPa (300psi), normally over 31 ,000kPa (4500psi), preferably over 41,000kPa (6000psi) and optionally over 55,000kPA (8000psi). Other microspheres with different strengths and densities may be used and generally stronger microspheres have higher densities. The higher the rating of the microspheres, the deeper the water and/or deeper in the water that they can be used in.

The microspheres may be glass microspheres. The microspheres may lower the density of the buoyant fluid to a density of approximately 530 kg/m³ at room temperature.

The buoyant fluid typically comprises from 25 to 60% vol/vol microspheres, optionally from 30 to 50% vol/vol microspheres and typically less than 55% vol/vol microspheres. The vol/vol of microspheres used is typically chosen to match the buoyancy required. If the vol/vol microspheres is however too high, the microspheres may contact one another and thereby be damaged or break so reducing the buoyancy they provide.

The vol/vol of microspheres used typically varies depending on the depth rating of the buoyant fluid. The vol/vol of microspheres used is normally a balance between the density of the buoyant fluid required and the depth rating of the buoyant fluid.

The grade of microspheres is also important. The sealed chamber of each microsphere is typically defined by a wall. The grade of the microspheres refers to the thickness of the wall.

The microspheres may be referred to as rigid containers. The sealed chamber of each microsphere may be referred to as a sealed void and may contain a gas.

The buoyant fluid typically also comprises a dispersant. The buoyant fluid typically comprises from 0 to 3% vol/vol dispersant, optionally from 0.5 to 2% vol/vol dispersant and typically 0.6% vol/vol dispersant. The dispersant typically helps to mitigate coagulation of the microspheres. Dispersion rather than coagulation of microspheres increases the flowability of the buoyant fluid, that is the ability of the buoyant fluid to flow.

The dispersant may be an imidazoline. The imidazoline is normally derived from an imidazole by the addition of H₂ across one of two double bonds. The imidazoline is typically one or more of 2-imidazolines, 3-imidazoline and 4-imidazoline.

The dispersant may be a surfactant. The dispersant may be poly(ethylene glycol) (PEG) dioleate having the formula:

CH3(CH2)7CH=CH(CH2)7CO(OCH2CH2)nO2C(CH2)7CH=CH(CH2)7CH3.

The PEG dioleate typically interacts with a hydrophilic outer surface of the microspheres and hydrophobic oil of the base fluid.

The buoyant fluid may have a specific gravity of less than 0.70g/cm³, optionally less than 0.65g/cm³, typically less than 0.60g/cm³, and often less than 0.55g/cm³.

The buoyant fluid may have a viscosity of from 9000 to 12000mPa·s at a shear rate of 1.1s⁻¹ at 293K and 900 to 1200mPa.s at a shear rate of 113s⁻¹ at 293K.

The viscosities detailed herein were determined using a Chandler 35 rotational viscometer with a number 1 spring and R1 B2 rotor-bob configuration (this allows the shear rate to be calculated as (0.37723*RPM) and viscosity as (300/RPM*8.91*dial reading).

The buoyant fluid normally provides lift of from 200 to 600 kg/m³, typically from 425 to 500 kg/m³.

In an alternative embodiment the dispersant may have from 50 to 100% m/M (mass/Molecular mass) of a polyamine amide salt and/or from 12.5 to 20% m/M of 2-butoxyethanol. The dispersant may be BYK-W 980™. This dispersant is preferable when the buoyant fluid is water-based.

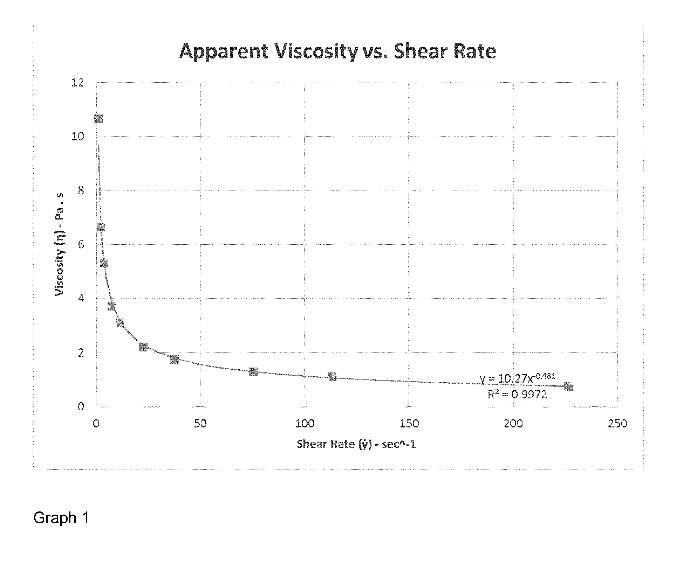

An embodiment of the invention will now be described by way of example only and with reference to the accompanying Graph 1 that shows the viscosity vs. shear of the buoyant fluid at 20°C and illustrates the non-Newtonian (shear thinning) properties of the buoyant fluid comprising the viscosifying agent.

The viscosifying agent helps to hold the microspheres in suspension in the buoyant fluid yet provide the required shear to give the buoyant fluid the relatively low viscosity and easy pumping characteristics required. The buoyant fluid has viscoelastic properties, that is, at low shear rates the fluid is very viscous while as the shear rate increases, the viscosity decreases. The lower the viscosity the easier it is to pump the fluid.

There is herein described a method of making the buoyant fluid. Firstly 500g of SIPDRILL™ 2/0 is heated and agitated with an overhead stirrer. Then, 1.42g of KRATON™ G1702 is added to the SIPDRILL™ and the temperature of the mixture raised to 70°C. The mixture is then mixed for 30 minutes at 70°C, with enough shear to create a small vortex. After mixing and when the mixture has cooled, any leftover white solid particles or a blue tinge to the mixture indicate insufficient mixing and that not all of the micelles have formed. If this is the case then mixing is resumed at 70°C for another 30 minutes.

Once the base fluid of SIPDRILL™ has been successfully viscosified with the KRATON™ and the mixture has cooled, microspheres and a dispersant are added in any order to produce the buoyant fluid. 19.98g of XLD 3000 glass microspheres are placed on top of 79.94g of the viscosified base fluid and 0.22ml of Lakeland Imidazoline 18OH and 0.2 ml of PEG 400 dioleate from Esterchem are added to the mixture.

An overhead stirrer or mixer is then used to blend the microspheres and other ingredients into the viscosified base fluid. High shear mixers should not be used as they could damage the microspheres.

Modifications and improvements can be incorporated herein without departing from the scope of the invention.

## Claims

1. A buoyant fluid comprising:
a base fluid,
microspheres, and
a viscosifying agent,
wherein the viscosifying agent comprises a block copolymer.

2. A buoyant fluid according to claim 1, wherein the base fluid is an oil.

3. A buoyant fluid according to claim 1 or claim 2, wherein the base fluid has a low toxicity to marine life, the aquatic toxicity for fish LC₅₀ being greater than or equal to 1000mg/l.

4. A buoyant fluid according to any preceding claim, wherein the base fluid comprises water.

5. A buoyant fluid according to any preceding claim, wherein the buoyant fluid comprises from 0.5 to 5% vol/vol viscosifying agent.

6. A buoyant fluid according to any preceding claim, wherein the block copolymer is a diblock copolymer.

7. A buoyant fluid according to any preceding claim, wherein the block copolymer is a linear diblock copolymer of styrene and one or more of ethylene, propylene and butadiene.

8. A buoyant fluid according to claim 7, wherein the styrene content of the linear diblock copolymer is from 20 to 35% wt/wt.

9. A buoyant fluid according to claim 7 or claim 8, wherein in use the viscosifying agent forms a plurality of micelles, the plurality of micelles comprising a core of poly(styrene) heads and a corona of poly(ethylene-co-propylene) or hydrogenated p(isoprene) tails.

10. A buoyant fluid according to any of claims 1 to 5, wherein the viscosifying agent is a polysaccharide.

11. A buoyant fluid according to any preceding claim, wherein the buoyant fluid comprises less than 55% vol/vol microspheres.

12. A buoyant fluid according to any preceding claim, wherein the buoyant fluid also comprises from 0 to 3% vol/vol of a dispersant.

13. A buoyant fluid according to claim 12, wherein the dispersant is poly(ethylene glycol) (PEG) dioleate.

14. A buoyant fluid according to any preceding claim, wherein the buoyant fluid has a specific gravity of less than 0.70g/cm³.

15. A buoyant fluid according to any preceding claim, wherein the buoyant fluid has a viscosity of from 9000 to 12000mPa·s at a shear rate of 1.1s⁻¹ at 293K.
